# EUROPEAN PATENT APPLICATION

(11) **EP 4 787 329 A1**
(43) Date of publication of application: **05.08.2026**
(21) Application number: 25155655.1
(22) Date of filing: 03.02.2025
(51) Int. Cl.: G06V 10/22, G06V 10/25

(54) **BOUNDING BOX ANNOTATION**

(71) Applicant: Helsing GmbH, 81671 Munich (DE)
(72) Inventor: WALDENMAIER, Alexander, 81671 Munich (DE); HOFMANN, Alexander, 81671 Munich (DE)
(74) Representative: Rummler, Felix

(57) **Abstract**

According to the present disclosure, there is provided a computer-implemented method for annotating an image for object detection, the method comprising: obtaining information indicative of a geographic, in particular geodetic position of at least one object; obtaining, from a camera, at least one image, wherein the image represents the object; determining a first position of the object in the image, based on the geographic position of the object; outputting, based on the determined first position, an image portion or a reference to an image portion representing the object; obtaining an input to generate, in the image portion, an annotation of the image, in particular a bounding box, wherein the annotation of the image is indicative of a second position of the object in the image; and matching the annotation to the geographic position of the object in the image.

## Description

### Field

The present disclosure generally relates to the annotation of objects in images, in particular bounding box annotation. More particularly, the present disclosure relates to a bounding box annotation process for ground-to-air detection of unmanned aerial vehicles (UAV).

### Background

In recent years, counter unmanned aerial systems (cUAS) have become more important to defend against threats. One application of such systems is the identification of UAVs. This can be done actively (e.g. through radar) or passively (e.g. through visible or infrared light electro-optical video detection).

Bounding box annotation of UAVs that are small in the image pixel domain is a challenging task. Birds, insects and planes can have a similar signature to UAVs. This makes it hard to differentiate between such objects. Commonly used annotation systems present the annotator with the full image sequence recorded by the camera. If the signature of the UAV is small, this process is prone to errors, as the annotator may miss a UAV in the large image. Additionally, the resulting bounding boxes do not contain any metadata like the UAV position in a world coordinate system.

The present invention aims to address those issues.

### Summary of the Invention

The present invention is defined in the independent claims. The dependent claims recite selected optional features.

In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

According to a first aspect of the present disclosure, there is provided a computer-implemented method for annotating an image for object detection, the method comprising: obtaining information indicative of a geographic, in particular geodetic position of at least one object; obtaining, from a camera, at least one image, wherein the image represents the object; determining a first position of the object in the image, based on the geographic position of the object; outputting, based on the determined first position, an image portion or a reference to an image portion representing the object; obtaining an input to generate, in the image portion, an annotation of the image, in particular a bounding box, wherein the annotation of the image is indicative of a second position of the object in the image; and matching the annotation to the geographic position of the object in the image.

The method enables better matching a real-world, geographic position, in particular geodetic position of an object with the position of the object in an image. The object may be an unmanned aerial vehicle (UAV). The position of the UAV in the real world may be expressed by coordinates, e.g. coordinates in a Global Navigation Satellite System such as GPS. The position of the UAV in the image may be expressed by pixel coordinates. The method is particularly useful for objects which are small, due to their size and/or distance, and which may be represented by only a few pixels on a screen.

In the present disclosure, the terms "geographic position" and "geodetic position" may be used interchangeably, and the term "geographic position" is meant to encompass "geodetic position" as a specific example.

In an example scenario, the geographic coordinates of the object are known. The pixel coordinates of the object in the image are approximated. To improve the accuracy of the approximation, a region in which the pixel coordinates of the object are expected to be located is cropped, i.e. extracted from the full image, thereby to obtain a portion of the full image (also referred to as cropped image or image crop). This reduces the search area and enables detecting the object and determining the object position more accurately and easily. In a subsequent step, an input is received to annotate the object in the cropped image. For example, the input is a (manual) user input, and the annotation is a bounding box. In the next step, the bounding box is mapped back to the full image. In particular, the bounding box is mapped from the coordinate system of the cropped image (crop coordinate system) to the coordinate system of the full image (full frame coordinate system). In a final step, the bounding box can be matched to the (known) real-world geographic (geodetic) coordinates of the object. The bounding box may be associated with additional information (metadata) such as the UAV type and position (coordinates, in particular GPS position, and/or distance from observer, angle relative to the observer, etc.). This information can be displayed to a user.

In an example, the coordinates of the annotated bounding box are converted as follows:
Bounding box coordinates -> full frame coordinates -> normalised camera-centric FRD (forward-right-down) coordinates -> normalised camera-centric NED (north-east-down) coordinates.

On the other end, the known GPS coordinates of the drone may be converted as follows:
GPS (geodetic) coordinates -> ECEF (earth-centred, earth-fixed) -> camera-centric NED (north-east-down) -> normalised camera-centric NED

Subsequently, the matching can be conducted using timestamps of both the GPS data and the camera frames.

The method enables training and developing detection algorithms and evaluating such algorithms based on UAV distance information. For example, the method enables determining at which distance a detection algorithm is able to detect a UAV.

In an embodiment, the first position represents an estimate of the position of the object in the image, and the second position represents a confirmation or correction of the first position. Accordingly, the annotation, which is indicative of the second position, can be used to verify that the position of the object in the image has been correctly estimated. Alternatively, the annotation can be used to correct the estimate. In other words, the second position may be identical to first position, resulting in a confirmation, or it may be different, resulting in a correction. These steps enable improving the accuracy of matching the object in the image and its geographic position.

In embodiments that use Non-Maximum Suppression (NMS), as described below, it is advantageous to also take into account the size of the object in the image domain.

In an embodiment, the method further includes obtaining information indicative of a geographic position and/or orientation of the camera; and determining, in particular estimating the first position of the object in the image based on the geographic position and/or orientation of the camera. Thereby, the first position of the object in the image may be determined more accurately.

In an embodiment, outputting the image portion representing the object includes: cropping the image, preferably centrally, around the first position of the object in the image, thereby to extract an image crop corresponding to the image portion; wherein the method further includes: mapping the generated annotation from the image crop to the image. Cropping the image to extract an image crop around the first position enables a more accurate annotation and determination of the second position.

In an embodiment, matching the annotation to the geographic position of the object in the image includes associating the information indicative of the geographic position of the object as metadata with the annotation. The method may further include outputting the annotated image, in particular together with any metadata associated with the annotation, to a user and/or a further image processing step. Thus, the annotation may be used to indicate additional information to a user or to provide this information to a subsequent processing step.

In an embodiment, the method further includes determining, in particular estimating, a size of the object in the image; determining whether the difference of the determined size of the object in the image and a size of the image portion, in particular the or an image crop, exceeds a predetermined threshold; and if the difference of the determined size of the object in the image and the size of the image portion exceeds the predetermined threshold, requesting an input, in particular a user input, to generate the annotation; or if the difference of the determined size of the object in the image and the size of the image portion does not exceed the predetermined threshold, automatically generating the annotation corresponding to the size and/or position of the image portion. These steps help improving the processing and annotation of objects of different sizes. For example, in case of a small and/or distant object, the image portion may be deliberately selected to be much larger than the object in the image, thereby to ensure that the object is "caught". In such case, an additional input (e.g. from a user) may be requested, thereby to enable an improved annotation. If there is no substantial discrepancy between the size of the object and the image portion, no such additional input is required.

In an exemplary implementation of this embodiment, the method also includes determining if the distance between a determined central position of the object and a determined central position of the image portion does not exceed a second predetermined threshold before automatically generating the annotation. If the second predetermined threshold is exceeded, another (user) input may be requested, However, if the size of the image portion (crop) is as small as the object, this implies that the accuracy of the estimated position has been determined as relatively high, in which case such central position matching is not required.

In an embodiment, outputting the image portion representing the object is based on a determined distance between the object and the camera; object size; image resolution; camera orientation; object pose and/or orientation; accuracy of the geographic position of the object; and/or accuracy of the geographic position of the camera. Any of these parameters may be used particularly to determine the dimensions of the image portion to be output. The method may further include determining and taking into account an uncertainty of any of these parameters.

In an embodiment, the method comprises determining an uncertainty of the first position and/or size of the object in the image; and determining whether to automatically generate the annotation based on the uncertainty. In this embodiment, if the uncertainty is below a threshold, the annotation can be automatically generated. If the uncertainty is above the threshold, a user input may be requested to enable generating the annotation. Accordingly, the decision on whether to "auto-annotate" is based on the uncertainty of the (centre) position and the uncertainty of the object size. In other words, this embodiment enables determining the likelihood that an auto-generated annotation (bounding box) overlaps the object by a given (predetermined) percentage. If the likelihood is above a threshold, auto-generation of the annotation is activated. Put in yet another way, the uncertainty represents a confidence value indicating a likelihood of correctly auto-annotating the object.

In an embodiment, the image portion contains a representation of multiple objects, and the method comprises: determining a respective distance between the first position of each object and a determined central position of the respective annotation(s); and matching the geographic position of a selected one of the multiple objects to the annotation whose central position is closest to the first position of the selected object. The method may also include obtaining, in particular from a user, multiple inputs to generate, in the image portion, multiple annotations of the image, wherein the multiple annotations of the image are indicative of a respective second position of the multiple objects. Multiple inputs can be obtained for a single image portion, or iteratively on multiple (similar) image portions containing more than one object. In case of multiple inputs, the above distance-based matching of geographic positions and annotations can be performed for each of the objects in the image. In particular, the distances of multiple pairs of first positions and central annotation positions are computed, and the positions of the pair having the smallest distance are assigned to each other.

In an embodiment, the annotation comprises a bounding box. The bounding box may be a rectangle around the object in the image. Initially, in response to the input to generate the annotation, the bounding box may be represented by coordinates in a coordinate system associated with the image portion, in particular the crop coordinate system. Following the matching step, the bounding box may be represented by coordinates in the full frame coordinate system.

In the context of the present invention, the term bounding box is intended to designate any kind of visual marker, including rectangles, circles, polygons for segmentation and other elements.

In an embodiment, the method comprises: outputting a plurality of image portions or references to a plurality of image portions; obtaining one or more inputs to generate annotations associated with objects contained in the image portions; determining if two or more of the image portions overlap with one another; in case of overlapping image portions, determining if more than one annotation can be associated with a same object; and selecting one of the annotations for an association with the same object. In particular, in an embodiment, there are plural objects, and the method comprises: cropping the at least one image to extract a plurality of image crops; for each of the image crops, obtaining one or more inputs to generate bounding boxes associated with objects contained in the image crop; determining if two or more of the image crops overlap with one another; in case of overlapping image crops, determining if there is more than one bounding box that can be associated with a same object; and selecting one of the bounding boxes and associating the selected bounding box with the object. The term cropping is used herein in the sense of selecting and extracting a portion of an image.

In an exemplary scenario, there may be two objects in the image. The image is cropped to obtain two overlapping image crops, each having one of the objects at its centre and the other one on the margin. In each image crop, both objects are annotated i.e. provided with respective bounding boxes. To avoid associating several bounding boxes with one and the same object, the bounding boxes are uniquely allocated to respective objects.

In an embodiment, there may be duplicate annotations (e.g. bounding boxes), and the method comprises eliminating at least some of the duplicate annotations. The eliminating may comprise suppressing at least some of the multiple annotations using Non-Maximum Suppression, NMS.

NMS is a post-processing technique used in object detection to eliminate duplicate detections and select the most relevant detected object(s). Here, it can be used to unify annotations (bounding boxes). NMS is known as such and not described further.

For example, each bounding box is associated with an image crop in which it was generated. When there is only one bounding box in a given image crop, the bounding box can be uniquely re-mapped to the image crop, using that association. However, if there are duplicate bounding boxes in a given image crop, and if duplicate bounding boxes are unified using NMS, for example, the association is lost. Therefore, in an embodiment, the association of a unified bounding box with an image crop is re-established by selecting one of a plurality of possible associations using predetermined selection criteria. As a consequence, the bounding boxes whose associations are retained or re-established can be uniquely re-mapped to their image crops. This is also applicable to annotations other than bounding boxes, and to image portions other than image crops.

In an embodiment, each image portion (e.g. image crop) is associated with a respective first position in the image, e.g. an expected object position in the image, and the method further comprises: determining a distance between each annotation (e.g. bounding box) and each first position; and sorting the annotations based on said distances, thereby to enable a selection of annotations based on said distances.

According to this embodiment, each image portion (crop) may be associated with an expected position of an object in the image, corresponding to the first position. The expected position of the object may be expressed by image coordinates. Some annotations may be eliminated by selecting only one annotation per image portion. This can be done by matching the annotations (bounding boxes) to the image portion (crop) which only have one annotation in it.

In an embodiment, the distance is the Euclidian distance between image coordinates of a centre of the annotation (e.g. bounding box) and image coordinates of the first position.

According to an embodiment, each image portion is associated with a respective first position in the image, the method further comprising: determining a distance between each annotation and each first position, and sorting the annotations based on said distances, thereby to enable a selection of annotations based on said distances. In particular, the method comprises: creating combinations of each bounding box with each first position; for each combination, determining the distance between the bounding box, in particular the bounding box centre and the first position; sorting the combinations by distance, thereby to obtain a list of combinations; and matching bounding boxes with respective image crops based on the list.

In this embodiment, each bounding box is combined with each expected object position. For each combination, the distance between the bounding box (centre) and the first position is determined. The combinations are then sorted based on the distances, thereby to obtain a list of combinations. For example, the combination having the shortest distance between the corresponding bounding box and first position is placed at the top of the list. Subsequently, the bounding boxes can be matched with respective image crops based on the list. For example, the "top" bounding box (i.e. the bounding box of the combination at the top of the list) is matched with the image crop corresponding to the "top" first position (i.e. the first position of the combination at the top of the list). This can be iterated until certain criteria are met. For example, the matching can be iterated until each image crop has been matched with a bounding box, or until each bounding box has been matched with an image crop. This is also applicable to annotations other than bounding boxes, and to image portions other than image crops.

In an embodiment, the method comprises: including any combination with an annotation whose association with an image portion has been removed at the end of the list.

In this embodiment, combinations with annotations with an unknown image portion association are de-prioritized and moved to the end of the list. Such annotations represent duplicates fused by NMS. Based on their ranking in the list, they are matched with image portions only if those image portions cannot be matched with other annotations of combinations higher up the list.

In an embodiment, the method comprises: removing, from the list, of a combination if the annotation of that combination does not intersect with the image portion corresponding to the first position of that combination.

Such combinations represent annotations, in particular bounding boxes that are too far from a corresponding image portion (e.g. crop) and are therefore removed from the matching process.

In an embodiment, the method comprises: removing, from the list, of a combination if the annotation of that combination originates from a different image portion than the image portion corresponding to the first position of that combination.

Such combinations also represent outliers and are removed from the list to improve the accuracy of the matching process.

In an embodiment, the method comprises: uniquely matching of annotations and image portions. In other words, there is an exclusive one-to-one matching between annotations and image portions.

The method may also comprise determining the number or percentage of unmatched bounding boxes and/or image crops. Also, the method may comprise determining the number of objects that were detected but not annotated, thereby helping to assess the accuracy of object detection and annotation methods. For example, there may be more annotated objects than image crops. This may be the case if, for example, flies and birds in the image are mistaken for objects of interest and annotated. There may also be image crops without an annotation, for example because an object of interest corresponding to an image crop was obscured (e.g. hidden behind a tree). This is also applicable to annotations other than bounding boxes, and to image portions other than image crops.

In an embodiment, the method comprises: associating the annotation with metadata relating to the annotated object. In this embodiment, the annotation additionally includes metadata relating to the object. For example, the object is an UAV, and the metadata represents the UAV type and UAV GNSS position. Generally, the metadata may represent any positional information such as GPS/GNSS position, an angle relative to the observer, a distance from the observer, etc.

According to another aspect of the present disclosure, there is provided system comprising one or more processors and one or more storage devices, wherein the system is configured to perform some or all of the steps of the computer-implemented method described above.

According to another aspect of the present disclosure, there is provided a computer program product for loading into a memory of a computer, comprising instructions, that, when executed by a processor of the computer, cause the computer to execute some or all of the steps of the computer-implemented method described above.

### Brief description of the drawings

The features, objects, and advantages of the present disclosure will become more apparent from the detailed description set forth below when taken in conjunction with the drawings in which:
Figure 1 schematically illustrates the steps of a method according to an exemplary embodiment of the present invention;
Figures 2a and 2a illustrate a flow diagram of the steps of a method for bounding box annotation in accordance with an exemplary embodiment of the invention;
Figure 3 illustrates a flow diagram of an exemplary implementation of one of the steps of Fig. 2b;
Figures 4 to 7 schematically illustrates the annotation of an object using the method of

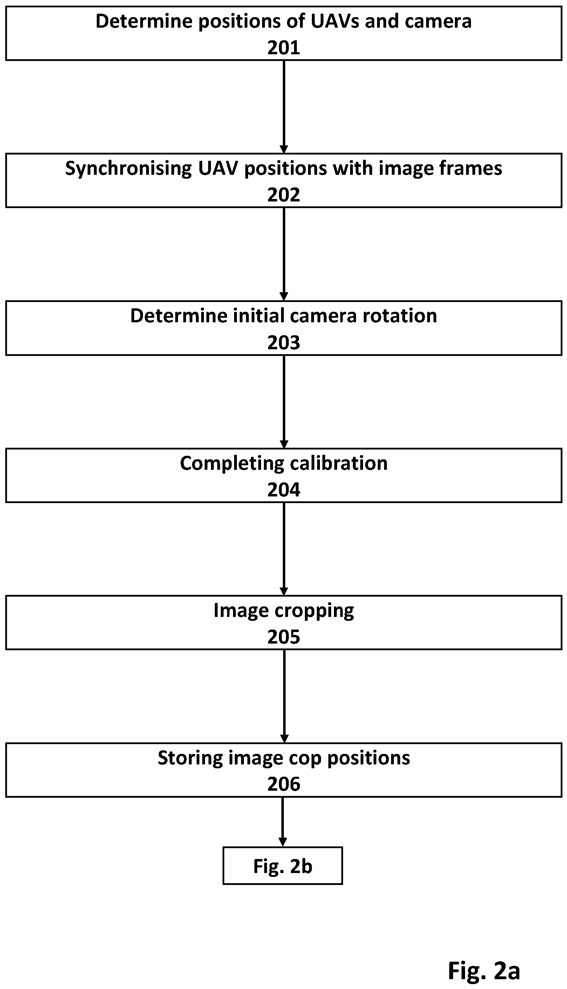

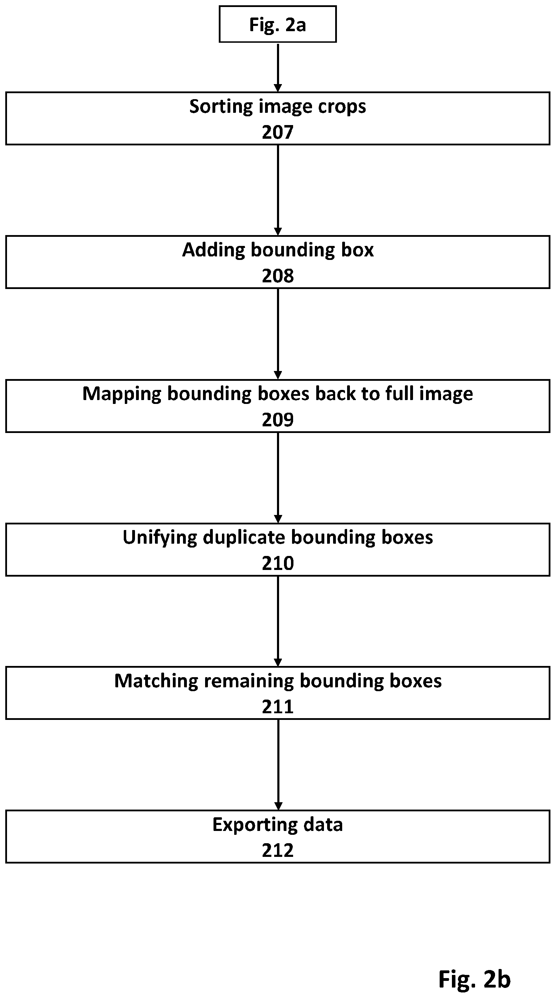

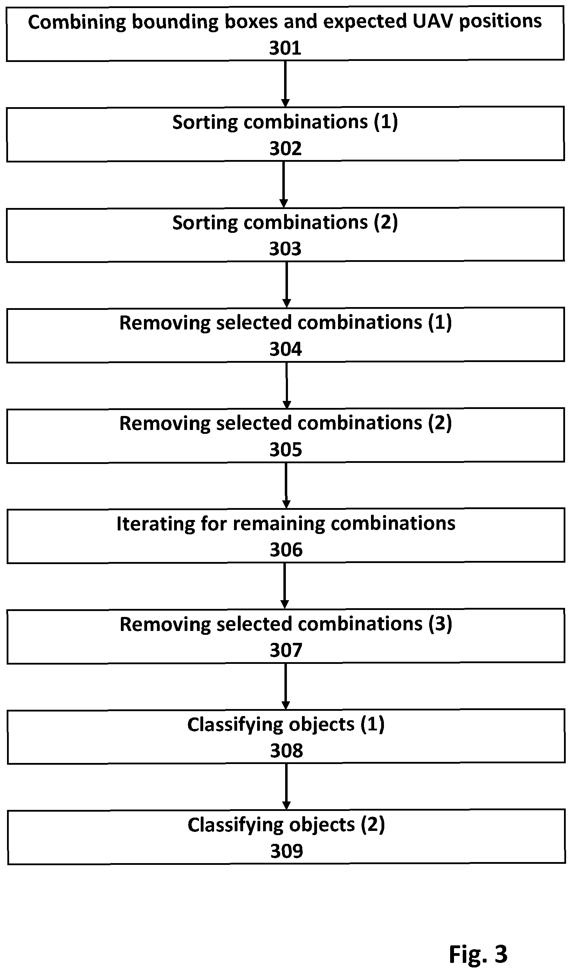

Figures 2 and 3 in different exemplary scenarios;

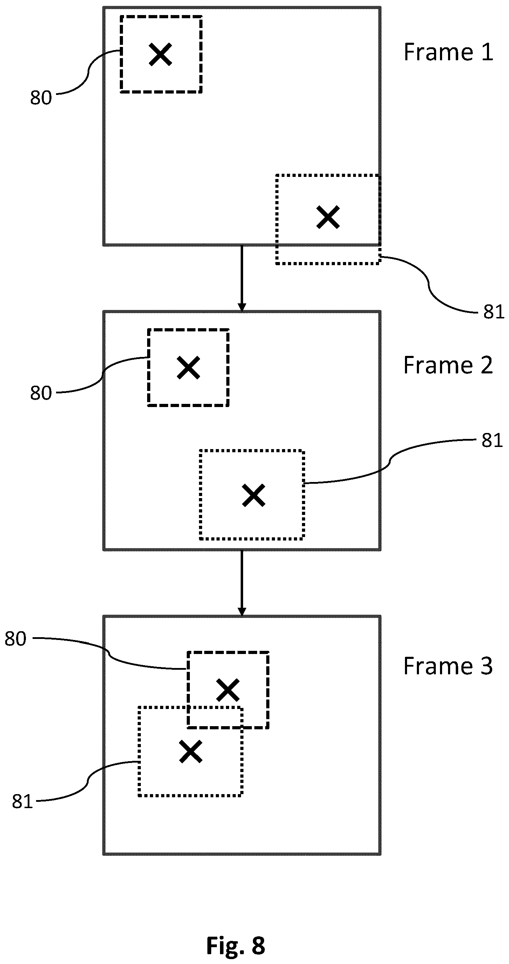

Figure 8 illustrates a flow diagram of an exemplary implementation of one of the steps of Fig. 2b; and

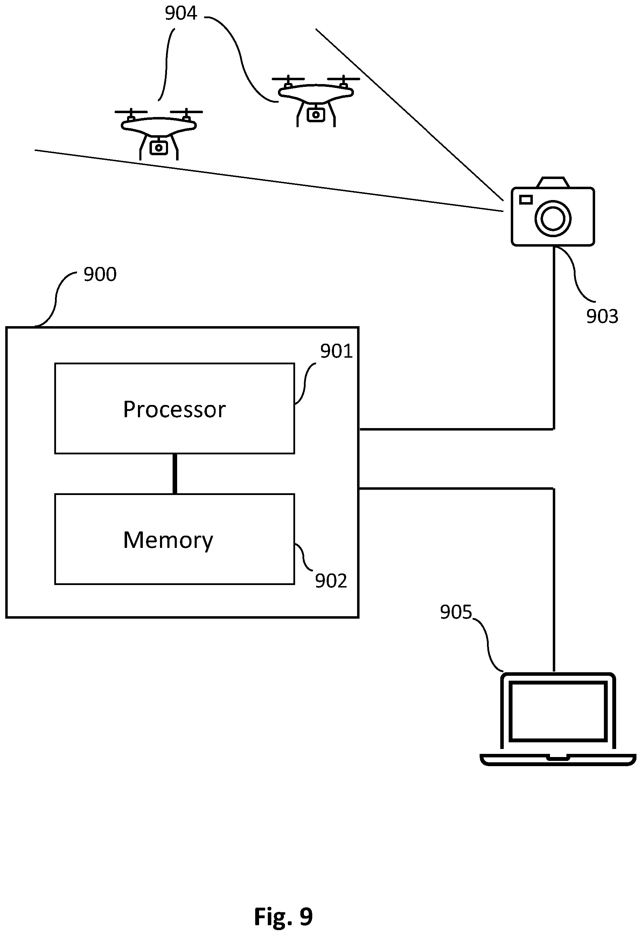

Figure 9 illustrates a schematic block diagram of a system 900 according to an exemplary embodiment of the present invention.

### Detailed description of exemplary embodiments

The present disclosure relates to a computer-implemented method for facilitating the annotation of objects such as UAVs in images captured by a camera. The idea is to use the GNSS information of the UAV and the camera to apply a world to pixel coordinate mapping. In other words, the method is intended to be used in modes of operation when such GNSS information is available. The UAV position is mapped from the world coordinates (GNSS) to the pixel coordinates in the image. Normally, such transformation can suffer from calibration errors and deviate by a few pixels from the ground truth. To address this, a correction process is introduced. The correction process may include a manual correction, although the present disclosure is not limited in this regard. That is, the region around the expected UAV image position is cropped to reduce the searching region during annotation. The resulting image crops are manually annotated with bounding boxes. The bounding boxes are mapped back from the crop coordinate system to the full frame coordinate system. Finally, the bounding boxes are matched to the UAV position from where the image crop resulted. This enables attaching metadata (e.g. UAV type, UAV position, etc.) to the bounding box annotation.

In examples, the method uses passive detection of UAVs in visible or infrared light electro-optical camera videos. The ground truth information of the position and dimensions of the UAV is provided in pixel coordinates. The videos may be recorded in a setup where the UAVs and camera are controlled by an operator, although the present disclosure is not limited in this respect.

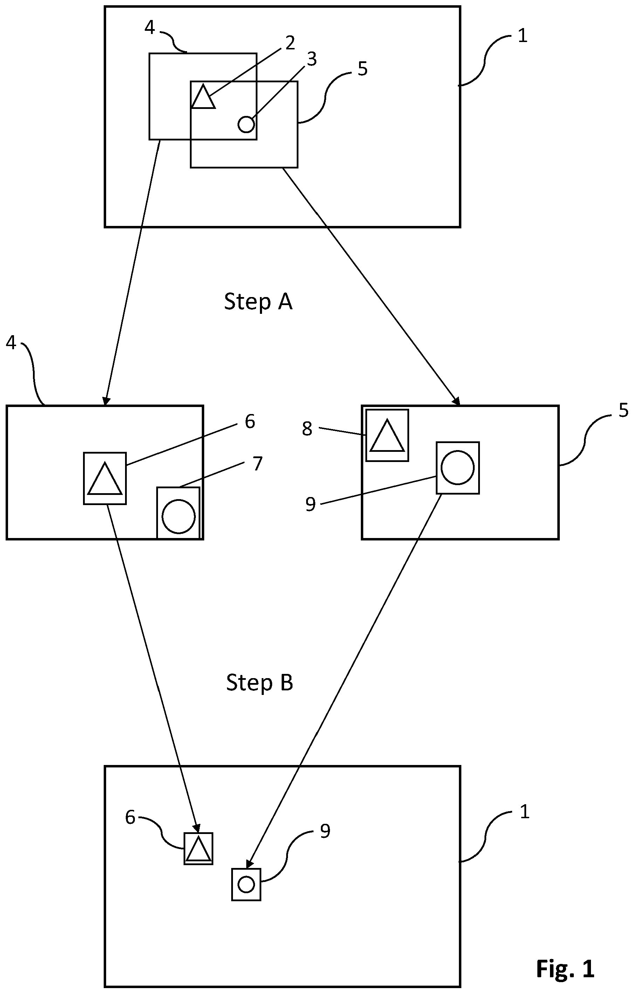

Figure 1 schematically illustrates the steps of a method according to an exemplary embodiment of the present invention. Figure 1 includes an image 1 with a representation of two objects 2 and 3, also referred to as object representations 2, 3. The image 1 may be captured by an electro-optical or infrared camera. The objects may be unmanned aerial vehicles (UAVs). In the pixel-domain of the image 1, such objects may be small and difficult to annotate. To facilitate the annotation, the image 1 is cropped around the object representations 2, 3. This is illustrated as Step A.

In the illustrated example, there are two image crops 4 and 5 around the object representations 2, 3, respectively. Due to the position of the object representations 2, 3 in the image 1 and the dimensions of the image crops 3 and 4, both object representations 2, 3 are included in both image crops 3, 4.

In the image crops 4, 5, the representations of the objects 2, 3 are annotated. In the illustrated example, the annotation is provided by placing bounding boxes around the representations of the objects. Specifically, in the image crop 4, bounding boxes 6 and 7 are placed around the representations of the objects 2, 3. In the image crop 5, bounding boxes 8 and 9 are placed around the representations of the objects 2, 3. The annotation may be generated by a user input.

In Step B, the image crops 4, 5 are mapped back to the image 1. In particular, the image crops 4, 5 are transformed from the crop coordinate system back to the full image coordinate system. Also, desired combinations (pairs) of bounding boxes and image crops are selected. This can be done, for example, based on the distance of the centres of the bounding boxes 6-9 from a reference point, as will be described in more detail below. The reference point may be the position of the image crops 4, 5 in the image 1, or positions that are associated with the image crops 4, 5 such as expected positions of the object representations.

In the illustrated example, the bounding boxes 7 and 8 are eliminated, and only the bounding boxes 6 and 9 are mapped back from the crop coordinate system to the full image coordinate system of the image 1. The process of determining and selecting desired combinations of bounding boxes and image crops is explained in more detail below.

Figures 2a and 2a illustrate a flow diagram of the steps of a method for bounding box annotation in accordance with an embodiment of the invention.

In step 201, the positions of the objects (e.g. UAVs) and of the camera that is used to obtain images of the UAVs are recorded. This may be done through GNSS receivers attached to the camera and the UAVs. To improve the accuracy, Real Time Kinematic (RTK) can be used.

In step 202, the GNSS positions of the moving UAVs are synchronised with the image frames captured by the camera (also referred to as camera frames) and interpolated.

It may be assumed that the camera is stationary. In this example, in step 203, the camera orientation is determined.

Following step 203, the calibration is complete, and the camera extrinsic parameters and UAV position are known (step 204). Using a pinhole camera model and the camera intrinsic parameters, the UAV world (geodetic) coordinates may be mapped to pixel coordinates with sufficient accuracy. This can be done using a pinhole camera model, a radial camera model, or a more advanced distortion model.

In step 205, image crops around the expected pixel positions of the UAVs are taken. The closer a UAV is to the camera, and the more uncertain the GNSS position, the larger the crop should be to contain the UAV with a sufficient probability. The larger the object in the image, the larger the image crop should be to ensure that it fully contains the object. Generally, image crops are generated from the expected UAV position in world/pixel coordinates, and these terms are used interchangeably herein.

In step 206, information (e.g. coordinates) of the image crop position (x1, y1, x2, y2) is saved.

In step 207, if multiple UAVs are present, the crops are sorted by UAV rather than by frame. This enables an annotator to use temporal information to identify the UAVs in the image crops. This step is described in more detail below in connection with Fig. 8.

In step 208, the annotator manually adds a bounding box around the UAV position if a UAV is present in the image. The temporal information can be used to refine the choice. In case two objects in an image crop are equally likely to be the UAV, both may be annotated.

In step 209, all bounding boxes from all crops in an image are mapped back from the crop reference frame to the full image reference frame.

In step 210, in case of multiple UAVs and overlapping crops, there can be duplicate bounding box annotations of the same UAV. These annotations may be unified using non-maximum suppression (NMS), for example. NMS as such is known and not described further. Bounding boxes that are not suppressed remain assigned to the image crop in which they were generated. For suppressed boxes, this information is set to unknown. In other words, suppressed bounding boxes could originate from either of two overlapping crops.

In step 211, the remaining bounding boxes for each frame are matched to the expected UAV position used to create them. This mapping enables determining the world (geodetic) position of the UAV bounding box. The mapping takes into account that image crops can overlap, and that bounding box annotations can be missing because the object in an image crop is not visible or additional objects in the same image crop are annotated. A more detailed example of the processing in step 211 is described in connection with Figure 3.

After the mapping is completed, the ground truth world position for each bounding box is known. In step 212, the resulting dataset can be exported in a desired format in combination with metadata provided by a UAS system.

Figure 3 illustrates a flow diagram of the steps that can be performed to implement step 211 above, in accordance with an exemplary embodiment.

In step 301, combinations are created of each annotation bounding box with each possible expected UAV position in pixel coordinates.

In step 302, the combinations are sorted by Euclidian distance in the pixel domain between annotated bounding box centre and expected UAV position (ascending order).

In step 303, combinations with unknown crop information are moved to the end of the list. This information can be lost due to the NMS described in step 210.

In step 304, all combinations of bounding boxes that do not intersect with their corresponding image crop are removed.

In step 305, all combinations where the bounding box originates from a different crop than the one generated by the expected UAV position are removed. If the crop information is unknown, the combination is kept.

In step 306, these steps are iterated over all remaining combinations to match them in the order that they are sorted.

In step 307, all combinations that contain either the bounding box or the image crop are removed. Thereby, it is ensured that there exists an exclusive one-to-one matching between annotation bounding box and image crop.

In step 308, a determination can be made that the remaining image crops which are unmatched come from image crops without bounding boxes. This can be the case because an object is too far to be visible in the image crop, or the object is outside of the image crop.

In step 309, a determination can be made that unmatched bounding boxes relate to objects that appeared in the frame but are not of interest.

The order of steps 301-309 is exemplary and may be varied. For example, the filtering in step 304 may already be performed in step 301, as is the case in the following examples.

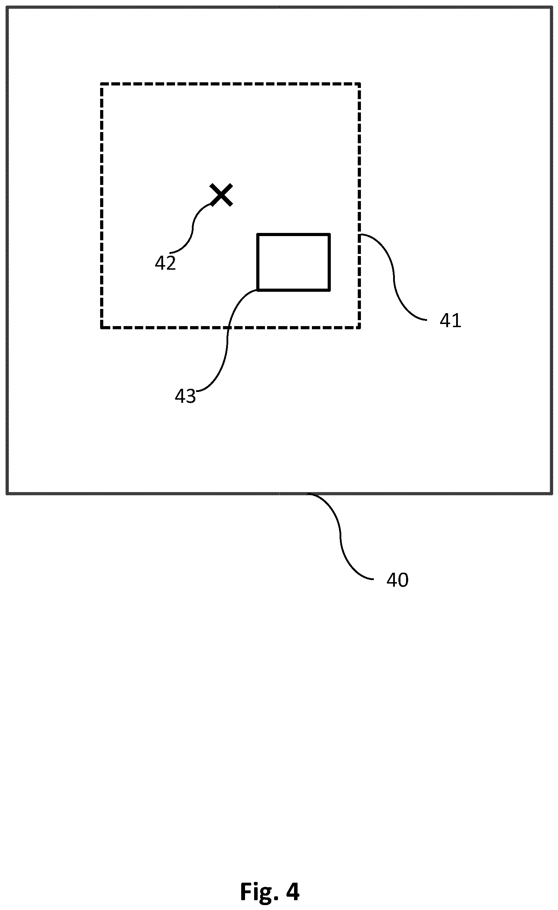

Figure 4 schematically illustrates the annotation of an object using the method of Figures 2 and 3 in an exemplary scenario. Figure 4 shows an image frame 40, an image crop 41 around an expected object position 42 (e.g. an expected drone centre), and a bounding box 43. In this scenario, there is only one object with the corresponding bounding box 43. The bounding box 43 overlaps with the image crop 41. As the image crop 41 is created from the expected drone centre, 42, they can be handled as the same object containing the GNNS (e.g. GPS) information.

In this example, as there are no overlapping bounding boxes, no NMS is required. In this scenario, the steps of Figure 3 are performed as follows:

| | |
|---|---|
| Step 301: | Create combinations of bounding boxes and image crops that intersect. Here, there is only one bounding box 43 and one image crop 41. Accordingly, there is only one combination. |
| Step 302: | The combinations are sorted by distance. Here, no action is required, as there is only one combination. |
| Step 303: | There is no unknown image crop information because no NMS was applied. |
| Step 304: | This was done in step 301. |
| Step 305: | No action required. The bounding box 43 was annotated in the image crop 41 that was created based on the expected object position 42. |
| Step 306: | The first combination in the list is the combination between the bounding box 43 and the image crop 41. They are matched. All other combinations that contain the bounding box 43 or the image crop 41 need to be removed; here, no remaining combinations need to be removed. |
| Step 307: | No image crops are remaining. |
| Step 308: | No bounding boxes are remaining. |

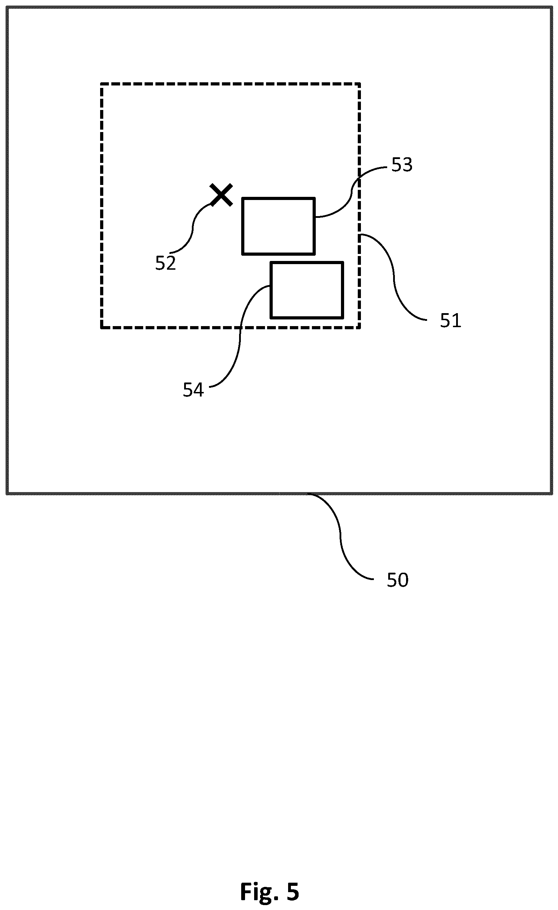

Figure 5 schematically illustrates another exemplary scenario. Figure 5 shows an image frame 50, an image crop 51 around an expected object position 52 (e.g. an expected drone centre), and two bounding boxes 53, 54. The bounding box 53, 54 overlap with the image crop 51. Again, as there are no overlapping bounding boxes, no NMS is required. In this scenario, the steps of Figure 3 are performed as follows:

| | | |
|---|---|---|
| Step 301: | Create combinations of bounding boxes and image crops that intersect. Here, there are two combinations, namely: | |
| | (i) | Bounding box 53 - image crop 51 |
| | (ii) | Bounding box 54 - image crop 51 |
| Step 302: | The combinations are sorted by distance. Here, the combination (i) is first in the list. | |
| Step 303: | There is no unknown image crop information because no NMS was applied. | |
| Step 304: | This was done in step 301. | |
| Step 305: | No action required. Both bounding boxes 53, 54 were annotated in the image crop 51 that was created based on the expected object position 52. | |
| Step 306: | The first combination in the list is combination (i), i.e. the combination of the bounding box 53 and the image crop 51. They are matched. All other combinations that contain the bounding box 53 or the image crop 51 are removed. Thus, combination (ii) is removed because it contains the image crop 51. | |
| Step 307: | No image crops are remaining. | |
| Step 308: | Bounding box 54 remains. Bounding box 54 may correspond to an object that is not of interest (e.g. a bird). | |

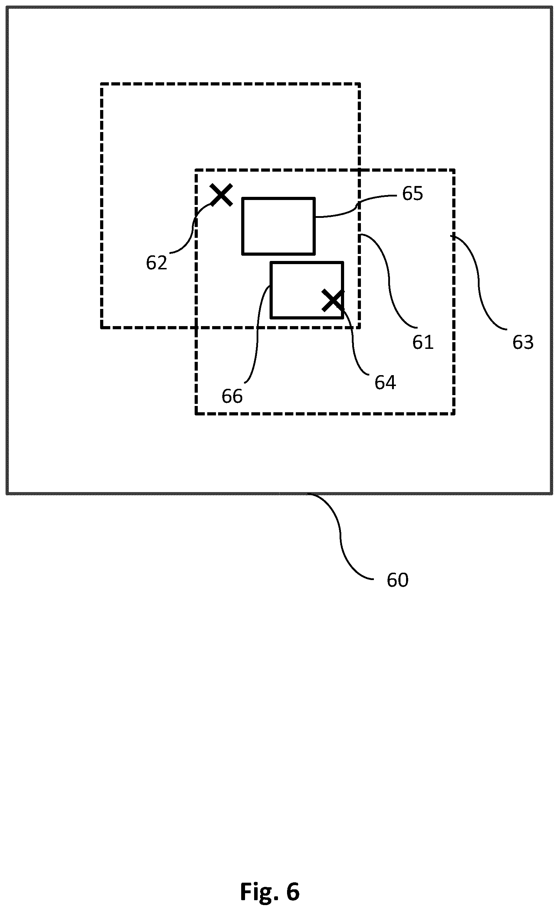

Figure 6 schematically illustrates another exemplary scenario. Figure 6 shows an image frame 60 including two image crops 61, 63 around expected object positions 62, 64 (e.g. expected drone centres), respectively. The image frame 60 further includes two bounding boxes 65, 66 that both overlap with both image crops 61, 63. The bounding boxes 65, 66 do not overlap with one another, and there are no other overlapping bounding boxes. Therefore, no NMS is required. In this scenario, the steps of Figure 3 are performed as follows:

| | | |
|---|---|---|
| Step 301: | Create combinations of annotation boxes and image crops that intersect: | |
| | (i) | Bounding box 65 - image crop 61 |
| | (ii) | Bounding box 66 - image crop 61 |
| | (iii) | Bounding box 65 - image crop 63 |
| | (iv) | Bounding box 66 - image crop 63 |
| Step 302: | The combinations are sorted by distance. | |
| Step 303: | There is no unknown image crop information because no NMS was applied. | |
| Step 304: | This was done in step 301. | |
| Step 305: | It is assumed that bounding box 65 was generated in the image crop 61 and that bounding box 66 was generated in the image crop 63. This can be based on the assumption that the object (drone) was recognizable, or this may be derived from the flight path. Therefore, the combinations (ii) and (iii) are removed. | |
| Step 306: | The first combination in the list is combination (iv). They are matched. All combinations that contain the bounding box 66 or the image crop 63 are removed (no action). The remaining combination (i) is also matched. | |
| Step 307: | No image crops are remaining. | |
| Step 308: | No bounding boxes are remaining. | |

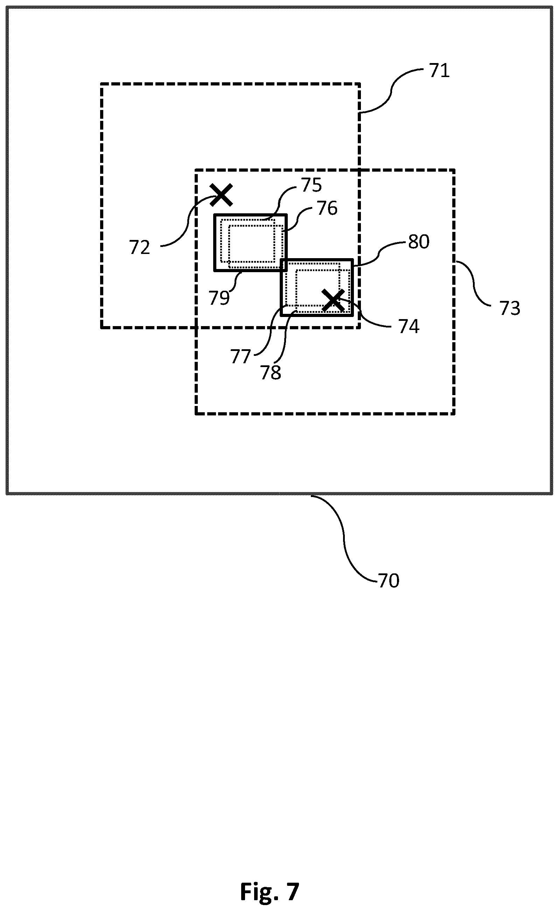

Figure 7 schematically illustrates another exemplary scenario. Figure 7 shows an image frame 60 including two image crops 71, 73 around expected object positions 72, 74 (e.g. expected drone centres), respectively. The drones are annotated in each image crop 71, 73. In particular, there are two pairs of overlapping bounding boxes 75/76 and 77/78. These pairs are fused, using NMS, to obtain bounding boxes 79 and 80. Due to the NMS, information on associations between bounding boxes and image crops is lost. In other words, it is not clear which of the image crops 71, 73 the bounding boxes 79 and 80 belong to. In this scenario, the steps of Figure 3 are performed as follows:

| | | |
|---|---|---|
| Step 301: | Create combinations of annotation boxes and image crops that intersect: | |
| | (i) | Bounding box 79 - image crop 71 |
| | (ii) | Bounding box 80 - image crop 71 |
| | (iii) | Bounding box 79 - image crop 73 |
| | (iv) | Bounding box 80 - image crop 73 |
| Step 302: | The combinations are sorted by distance. Bounding box 79 is closer to the centre of image crop 71. Bounding box 80 is closer to the centre of image crop 73. | |
| Step 303: | As mentioned above, the bounding boxes 79, 80 have lost their information on which image crop they belong to. (If there was a bounding box with known image crop information, it would be placed at the top of the list). | |
| Step 304: | This was done in step 301. | |
| Step 305: | The image crop information is unknown. Therefore, all combinations are kept. | |
| Step 306: | The first combination in the list is combination (iv). They are matched. Combinations (ii) and (iii) are removed. This is done because each of them contains a crop or bounding box from the matched combination. Only combination (i) remains and is matched. Step 306 is part of an iterative process that is performed (iterated) until matching is complete, i.e. until there are no more bounding boxes and image crops can be matched. | |
| Step 307: | No image crops are remaining. | |
| Step 308: | No bounding boxes are remaining. | |

As mentioned above, in step 207 (Fig. 2b), if multiple UAVs are present, the image crops are sorted by UAV rather than by frame. This enables an annotator to use temporal information to identify the UAVs in the image crops. This is illustrated in Figure 8. The image crops 80 are shown to an annotator in a sequence, thereby enabling the annotator to follow the corresponding drone over time. The same applies to image crop 81. In contrast, if the image crops 80 and 81 were shown by frame (i.e. image crop 80 of frame 1 followed by image crop 81 of frame 1 followed by image crop 80 of frame 2 etc.) the tracking of the moving drone would be more difficult to follow.

Figure 9 illustrates a schematic block diagram of a system 900 according to an embodiment of the present disclosure. The system comprises at least one processor 901 and at least one memory 902. The memory 902. The system 900 is configured to perform the computer-implemented method according to embodiments of the present disclosure. In particular, the memory 902 may store instructions, that, when executed by the processor 901, cause the system 900 to execute a computer-implemented method according to embodiments of the present disclosure.

The system 900 may comprise or be communicatively coupled with a camera 903 and a user terminal 905. The camera is configured to capture images of UAVs, e.g. drones 904. Image data from the camera 903 is transmitted to the system 900 for processing in accordance with the methods described herein. The user terminal 905 is configured to receive inputs from a user (annotator), in particular inputs defining annotations, e.g. bounding boxes, and metadata relating to the annotated objects. However, the present disclosure is not limited to manual annotations. In some embodiments, the annotation process may be automated. For example, bounding boxes may be generated using object/feature detection methods. Suitable object/feature detection methods are as such known and not described further.

The method can be applied to training, testing and improving the accuracy of computer vision or drone detection algorithms and other applications.

Methods according to embodiments of the present disclosure include obtaining information on an object, e.g. its position, and combining it with an annotation procedure, thereby to enable a more accurate representation and tracking of objects. In particular, the disclosed approach increases the accuracy of the bounding box annotation for UAVs that are small, i.e. whose representation in the pixel domain has dimensions of a few pixels (<10x10px) only. Additionally, the disclosed approach enables developing and evaluating counter unmanned aerial systems with more detailed information. For instance, evaluation pipelines can be created that provide information on detected UAVs such as the distance at which they are detected.

## Claims

1. A computer-implemented method for annotating an image for object detection, the method comprising:
obtaining information indicative of a geographic, in particular geodetic position of at least one object;
obtaining, from a camera, at least one image, wherein the image represents the object;
determining a first position of the object in the image, based on the geographic position of the object;
outputting, based on the determined first position, an image portion or a reference to an image portion representing the object;
obtaining an input to generate, in the image portion, an annotation of the image, in particular a bounding box, wherein the annotation of the image is indicative of a second position of the object in the image; and
matching the annotation to the geographic position of the object in the image.

2. The method of claim 1, wherein the first position represents an estimate of the position of the object in the image, and wherein the second position represents a confirmation or correction of the first position.

3. The method of claim 1 or 2, further including:
obtaining information indicative of a geographic position and/or orientation of the camera; and
determining, in particular estimating the first position of the object in the image based on the geographic position and/or orientation of the camera.

4. The method of any preceding claim, wherein outputting the image portion representing the object includes:
cropping the image, preferably centrally, around the first position of the object in the image, thereby to extract an image crop corresponding to the image portion; and
wherein the method further includes:
mapping the generated annotation from the image crop to the image.

5. The method of any preceding claim, wherein matching the annotation to the geographic position of the object in the image includes:
associating the information indicative of the geographic position of the object as metadata with the annotation.

6. The method of any preceding claim, further including
outputting the annotated image, in particular together with any metadata associated with the annotation, to a user and/or a further image processing step.

7. The method of any preceding claim, further including:
determining, in particular estimating, a size of the object in the image;
determining whether the difference of the determined size of the object in the image and a size of the image portion, in particular the or an image crop, exceeds a predetermined threshold; and
if the difference of the determined size of the object in the image and the size of the image portion exceeds the predetermined threshold, requesting an input, in particular a user input, to generate the annotation; or
if the difference of the determined size of the object in the image and the size of the image portion does not exceed the predetermined threshold, in particular if the distance between a determined central position of the object and a determined central position of the image portion does not exceed a second predetermined threshold, automatically generating the annotation corresponding to the size and/or position of the image portion.

8. The method of any preceding claim, wherein outputting the image portion representing the object is based on a determined distance between the object and the camera; object size; image resolution; camera orientation; object pose and/or orientation; accuracy of the geographic position of the object; and/or accuracy of the geographic position of the camera and/or accuracy of the geographic position of the camera, and/or wherein the method further comprises:
determining an uncertainty of the first position and/or size of the object in the image; and
determining whether to automatically generate the annotation based on the uncertainty.

9. The method of any preceding claim, wherein the image portion contains a representation of multiple objects, the method comprising:
determining a respective distance between the first position of each object and a determined central position of the respective annotation(s);
matching the geographic position of a selected one of the multiple objects to the annotation whose central position is closest to the first position of the selected object; and optionally
obtaining, in particular from a user, multiple inputs to generate, in the image portion, multiple annotations of the image, wherein the multiple annotations of the image are indicative of a respective second position of the multiple objects.

10. The method of any preceding claim comprising:
outputting a plurality of image portions or references to a plurality of image portions;
obtaining one or more inputs to generate annotations associated with objects contained in the image portions;
determining if two or more of the image portions overlap with one another;
in case of overlapping image portions, determining if more than one annotation can be associated with a same object; and
selecting one of the annotations for an association with the same object, wherein selecting one of the annotations for an association with the same object optionally comprises eliminating duplicate annotations, in particular by suppressing duplicate annotations using Non-Maximum Suppression, NMS.

11. The method of claim 10 wherein each image portion is associated with a respective first position in the image, the method further comprising:
determining a distance between each annotation and each first position, wherein, in particular, the distance is the Euclidian distance between image coordinates of a centre of the annotation and image coordinates of the first position; and
sorting the annotations based on said distances, thereby to enable a selection of annotations based on said distances.

12. The method of claim 11, comprising:
creating combinations of each annotation with each first position;
for each combination, determining the distance between the annotation, in particular the annotation centre and the first position;
sorting the combinations by distance, thereby to obtain a list of combinations; and
matching annotations with respective image portions based on the list;
wherein the method optionally comprises:
including any combination with an annotation whose association with an image portion has been removed at the end of the list;
removing any combination from the list if the annotation of that combination does not intersect with the image portion corresponding to the first position of that combination; and/or
removing any combination from the list if the annotation of that combination originates from a different image portion than the image portion corresponding to the first position of that combination.

13. The method of any preceding claim,
wherein the image portions comprise image crops,
wherein the annotations comprise bounding boxes,
wherein said input is obtained from a user, and/or
wherein outputting said image portion comprises displaying the image portion to a user.

14. A computer program product for loading into a memory of a computer, comprising instructions, that, when executed by a processor of the computer, cause the computer to execute a computer-implemented method of any of claims 1-13.

15. A system comprising one or more processors and one or more storage devices, wherein the system is configured to perform the computer-implemented method of any one of claims 1-13.
